# EUROPÄISCHE PATENTSCHRIFT

(11) **EP 2 085 173 B1**
(45) Veröffentlichungstag und Bekanntmachung des Hinweises auf die Patenterteilung: **01.12.2010**
(21) Anmeldenummer: 09160148.4
(22) Anmeldetag: 06.09.2006
(51) Int. Cl.: B23K 26/14, B23K 9/173, B23K 9/32, B23K 9/29, F23D 14/52, F16J 15/46, F16L 17/10

(54) **Verfahren zur Prozesssteuerung einer Roboter-Schweißanlage mit Wartungsablauf des Schweißprozesses zum Wechseln der Gasdüse**
Method for process control of a robot welding assembly with maintenance periodical check for changing the gas nozzle
Procédé de commande de processus d'une installation de soudure de robot pour verification périodique de la maintenance en vu de changer la buse de gaz

(30) Priorität: 09.09.2005 AT 14812005
(43) Veröffentlichungstag der Anmeldung: 05.08.2009
(62) Teilanmeldung aus: 06774766.7
(73) Patentinhaber: Fronius International GmbH, 4643 Pettenbach (AT)
(72) Erfinder: Berger, Ewald, 4600 Wels (AT); Miessbacher, Gerhard, 4600 Wels/Thalheim (AT); Nöbauer, Harald, 4533 Piberbach (AT); Staufer, Herbert, 4501 Neuhofen an der Krems (AT); Steinmaurer, Markus, 4550 Kremsmünster (AT); Rührnössl, Manfred, 4030 Linz (AT)
(74) Vertreter: Sonn & Partner Patentanwälte

(56) Entgegenhaltungen:
- US-A- 2 872 563
- US-A- 4 645 901
- US-A1- 2003 029 851
- US-A1- 2005 046 180

## Beschreibung

Die Erfindung betrifft ein Verfahren zur Prozesssteuerung einer Roboter-Schweißanlage mit einer Steuervorrichtung und einem an einem Roboterarm befestigten Schweißbrenner gemäß dem Oberbegriff des Anspruchs 1 (siehe, z.B., US 4 645 901).

Aus dem Stand der Technik sind Schweißgeräte und Schweißverfahren für abschmelzende Elektroden, beispielsweise MIG/MAG-Schweißprozesse, bekannt. Weiters sind Anlagen und Verfahren zum Schweißen mittels eines Laserstahls bekannt. Des Weiteren ist die Zusammenführung dieser Prozesse als Laser-Hybrid-Verfahren mit entsprechenden Vorrichtungen ebenso bekannt und weit verbreitet.

Beispielsweise sind aus der WO 02/40211 und der WO 01/38038 zum Stand der Technik zählende Vorrichtungen für einen Laser-Hybrid-Schweißprozess bekannt. Diese Schweißanlagen erweisen sich vor allem bei der Verwendung von Mehrdraht-Schweißbrennern als nachteilig, da die Gasdüse nicht auf die speziellen Verhältnisse, die sich bei der Verwendung von mehreren Schweißdrähten hinsichtlich Brennerabstand, Stickoutlängen, usw. ergeben, Rücksicht nimmt, was zu Problemen bei der Schweißprozessregelung führen kann.

Solche bekannte Schweißanlagen werden in der automatisierten Fertigungsindustrie intensiv in Form von computergesteuerten Roboterschweißanlagen eingesetzt. Hierbei wird der Schweißbrenner von einem Roboterarm entlang der Verbindungsstellen von Werkstücken geführt. Der Schweißprozess bedingt im Austrittsbereich des Schweißdrahtes an der Gasdüse und dem Kontaktrohr des Schweißbrenners Ablagerungen, die durch Schweißspritzer, Kontaktverschweißungen zwischen Schweißdraht und Kontaktrohr und dergleichen hervorgerufen werden. Deshalb erweist sich eine regelmäßige Wartung bzw. Reinigung des Schweißbrenners im Austrittsbereich des Schweißdrahtes als notwendig, um einen störungsfreien Prozessablauf zu ermöglichen. Hierzu werden die Kontaktrohre, welche eine elektrische Verbindung mit dem Schweißdraht herstellen, und gegebenenfalls weitere Teile, wie z.B. die Gasdüse, manuell durch ein Wartungspersonal ausgetauscht. Hierzu sind die üblicherweise verschraubten Kontaktrohre bzw. die aufgeschraubte Gasdüse einzeln abzumontieren und zu montieren. Dies hat sich als sehr nachteilig erwiesen und erfordert einen hohen Kosten- und Zeitaufwand, da hierbei ganze Produktionslinien zum Stillstand kommen.

Eine Möglichkeit eines automatisierten Wechsels von Komponenten eines Schweißbrenners ist in der US 4,645,901 A beschrieben. Dabei ist es jedoch erforderlich die zu wechselnden Komponenten mit entsprechenden Haltevorrichtungen bzw. Greifbacken zu erfassen und gegen die Haltekraft der mechanischen Verbindungseinrichtung auf den Schweißbrenner einen entsprechenden Zug aufzubringen, sodass sich die zu wechselnde Komponente vom Schweißbrenner löst. Abgesehen vom höheren Aufwand eines solchen Wartungsablaufs ist die Sicherheit des Abkoppelns der Komponenten nicht gegeben.

Die US 2005/0046180 A1 beschreibt eine Möglichkeit der Herstellung einer dichten Verbindung zwischen zwei Komponenten.

Die US 2,872,563 A beschreibt eine Vorrichtung zur Sicherung einer Gasdüse am Schweißbrenner ohne die Notwendigkeit auf der Gasdüse ein Gewinde anzubringen. Zu diesem Zweck wird die Gasdüse auf einen entsprechend gestalteten Teil des Schweißbrenners aufgeschoben und mit Hilfe einer elastischen Hülse verklemmt. Zum Montieren der Gasdüse und Demontieren der Selben ist die Drehung einer Komponente erforderlich, was den entsprechenden Vorgang verkompliziert.

Die Aufgabe der vorliegenden Erfindung liegt darin, Schweißprozesse und insbesondere erforderliche Wartungsabläufe effizienter zu gestalten bzw. zu verbessern und hierfür geeignete Komponenten eines Schweißbrenners zur Verfügung zu stellen.

Die erfindungsgemäße Aufgabe wird dadurch gelöst, dass die Verbindung zwischen der Gasdüse und dem Inneneinsatz des Schweißbrenners durch räumliche Verkleinerung eines expandierfähigen Fixierungselements des Schweißbrenners gelöst wird, und nach der Positionierung der anderen Gasdüse am Schweißbrenner zwischen der Gasdüse und dem Inneneinsatz des Schweißbrenners durch räumliche Ausdehnung des expandierfährigen Fixierungselements eine insbesondere gasdichte Verbindung hergestellt wird, wobei der Zustand des expandierfähigen Fixierungslements zum Lösen und Fixieren der Gasdüse festgelegt wird, indem das mit einer hydraulischen oder pneumatischen Druckerzeuger aufweisenden Versorgungseinrichtung gekoppelte Fixierungselement über die mit dem Druckerzeuger verbundene Steuervorrichtung angesteuert wird.

Diese Ausgestaltung ist vorteilhaft, da durch Verwendung eines expandierfähigen Fixierungselements, welches einerseits eine Befestigung der Gasdüse und andererseits einen gasdichten Abschluss der Verbindung bewirkt, in einfacher Weise durch Aktivieren oder Deaktivieren des Fixierungselements ein Lösen oder Befestigen der Gasdüse ermöglicht wird. Der Zustand des expandierfähigen Fixierungselements kann mittels unterschiedlichster Betätigungs- bzw. Versorgungseinrichtungen in einfacher Weise durch Steuersignale einer Steuervorrichtung des Schweißgeräts oder der Robotersteuerung festgelegt werden, wodurch eine Automatisierung des Wartungs- bzw. Reinigungsprozesses des Schweißbrenners möglich ist, da die Gasdüse vollautomatisch ausgetauscht werden kann. Somit kann der Zeitaufwand für die Wartung des Schweißbrenners minimiert werden und der Fertigungsprozess effizienter gestaltet werden. Weiters ist kein Wartungspersonal erforderlich. Gegebenenfalls können durch die kürzeren Wartungszeiten, die Wartungsintervalle verkürzt werden, so dass durch kürzere Einsatzdauer der Komponenten der Verschleiß und die Verschmutzung der Gasdüse bzw. der Kontaktrohre verringert werden kann. Durch ein derartiges Verfahren wird die Wartung eines Schweißbrenners erheblich vereinfacht und es kann diese besonders einfach automatisiert, durch eine Roboteranlage übernommen, werden.

Vorgehensweisen nach den Ansprüchen 2 und 3 ermöglichen eine einfache Bestimmung der Lager des Schweißbrenners an definierten Koordinaten der Robotersteuerung, wodurch entsprechend positionierte Gasdüsen automatisch am Schweißbrenner montiert werden können.

Vorteilhafte Abläufe zum Steuern der Fixierung der Gasdüse sind in den Ansprüchen 4 und 5 beschrieben.

Ein Aufbau des Fixierungselements nach Anspruch 6 ist besonders kostengünstig und wirkungsvoll, da ein elastischer Schlauch durch Belüften seines Innenraumes in einfacher Weise ausgedehnt werden kann, so dass sich zur Verbindungsherstellung die Kontaktfläche des Schlauchs an die Gasdüse presst. Vorteilhaft ist auch eine Ausführungsvariante bei der das Fixierungselement durch eine Membran gebildet ist, da der Platzbedarf einer derartigen Membran in der Gasdüse bzw. dem Inneneinsatz bei guter Funktionalität sehr gering ist.

In besonders effizienter Weise kann das Fixierungselement mit einem Strömungskanal für ein Fluid verbunden werden, der wiederum mit der hydraulischen oder pneumatischen Versorgungseinrichtung verbunden wird.

Weiters kann die Versorgungsvorrichtung durch eine vorhandene Schutzgasversorgung des Schweißgerätes oder eine eigenständige Druckluftanlage gebildet werden.

Durch, eine Variante nach Anspruch 9 können Komponenten des Crossjets als Versorgungseinrichtung verwendet werden, die in einer Laser-Hybrid-Schweißanlage ohnehin vorhanden sind, so dass ein kostengünstiger und kompakter Aufbau des Schweißbrenners eines Laser-Hybrid-Schweißkopfes ermöglicht wird.

Eine Ausführung des Verfahrens nach Anspruch 10 erweist sich als vorteilhaft, da durch eine kraftschlüssige, bevorzugt um den vollen Umfang des Inneneinsatzes lückenlose Verbindung ein guter Halt der Gasdüse gewährleistet ist und die Verbindung gleichzeitig gasdicht ist, so dass spezielle Dichtungselemente oder dgl. nicht notwendig sind.

Eine Ausführungsvariante nach Anspruch 11 ermöglicht einen definierten Sitz der Gasdüse am Inneneinsatz, so dass die Komponenten im Inneren des Inneneinsatzes korrekt zueinander positioniert sind und eine reibungslose Prozessdurchführung ermöglicht wird. Weiters verhindert ein Positionierungselement in vorteilhafter Weise ein ungewolltes Verdrehen der am Inneneinsatz montierten Gasdüse.

Die vorliegende Erfindung wird anhand der beigefügten, schematischen Zeichnungen näher erläutert.

Darin zeigen:
Fig. 1 einen Laser-Hybrid-Schweißkopf einer Roboter-Schweißanlage in Seitenansicht;
Fig. 2 eine vereinfachte Detailansicht der Anordnung aus Fig. 1 im Bereich der Gasdüse des Schweißbrenners;
Fig. 3 eine Explosionszeichnung einer möglichen Variante eines Schweißbrenners in Schrägansicht;
Fig. 4 eine Variante eines Mehrdraht-Schweißbrenners mit einem Fixierungselement im Bereich der Gasdüse im Längsschnitt gemäß Schnittlinie IV-IV in Fig. 5;
Fig. 5 einen Inneneinsatz eines Schweißbrenners mit aufgesetzter Gasdüse in stirnseitiger Vorderansicht gemäß Pfeil V in Fig. 4;
Fig. 6 den Innenaufsatz mit dem Fixierungselement und in strichlierten Linien angedeuteter Gasdüse in Seitenansicht;
Fig. 7 einen Schweißbrenner mit einem in Form eines expandierfähigen Schlauches ausgeführten Fixierungselement im Halbschnitt gemäß Linie VII-VII in Fig. 5;
Fig. 8 eine weitere Variante eines Schweißbrenners bzw. einer Gasdüse, bei der das Fixierungselement durch eine Membran gebildet ist, im Halbschnitt; und
Fig. 9 und 10 ein Kontaktrohr in vereinfachter und vergrößerter Darstellung.

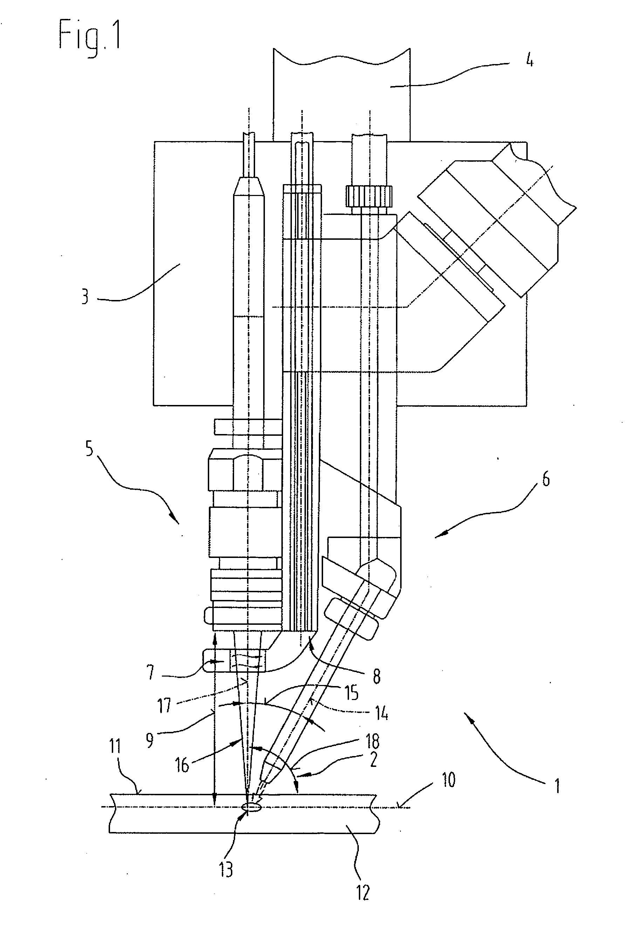

Die Erfindung wird nachfolgend anhand eines Laser-Hybrid-Schweißkopfes 1 entsprechend Fig. 1 näher erläutert. Es sei jedoch bereits einführend festgehalten, dass die Erfindung auch bei Ein- oder Mehrdraht-Schweißbrennern, die ausschließlich für Lichtbogen-Schweißprozesse mit abschmelzender Elektrode vorgesehen sind, insbesondere bei MIG/MAG-Brennern, angewendet werden kann.

In Fig. 1 ist ein Laser-Hybrid-Schweißkopf 1 zur Durchführung eines kombinierten Laser- und Lichtbogen-Schweißprozesses dargestellt, der eine Gasdüse 2 aufweist, die für den Lichtbogen-Schweißprozess benötigt wird.

Bei diesem Laser-Hybrid-Schweißkopf 1 werden handelsübliche, aus dem Stand der Technik bekannte Elemente bzw. Baugruppen in spezieller Kombination zueinander eingesetzt. Dabei sind an zumindest einer Montageplatte 3, welche mit einem Roboter, insbesondere einem Roboterarm 4, wie schematisch angedeutet, verbunden ist, diese Elemente bzw. Baugruppen angeordnet. Die Elemente bzw. Baugruppen können durch einen Laser 5 oder eine optische Fokussiereinheit für den Laser 5 und einen Schweißbrenner 6 mit der Gasdüse 2 für den Lichtbogen-Schweißprozess gebildet sein. Der Schweißbrenner ist über ein Schlauchpaket mit einem nicht näher dargestellten Schweißgerät verbunden, das Komponenten wie eine Stromquelle, eine Steuervorrichtung, Bedienelemente, ein Drahtvorschubgerät usw. aufweist. Ein weiteres Element bzw. eine weitere Baugruppe kann durch einen dem Laser 5 bzw. der optischen Fokussiereinheit zugeordneten Crossjet 7 gebildet sein, wobei diesem wiederum eine Ableitvorrichtung 8 zugeordnet ist.

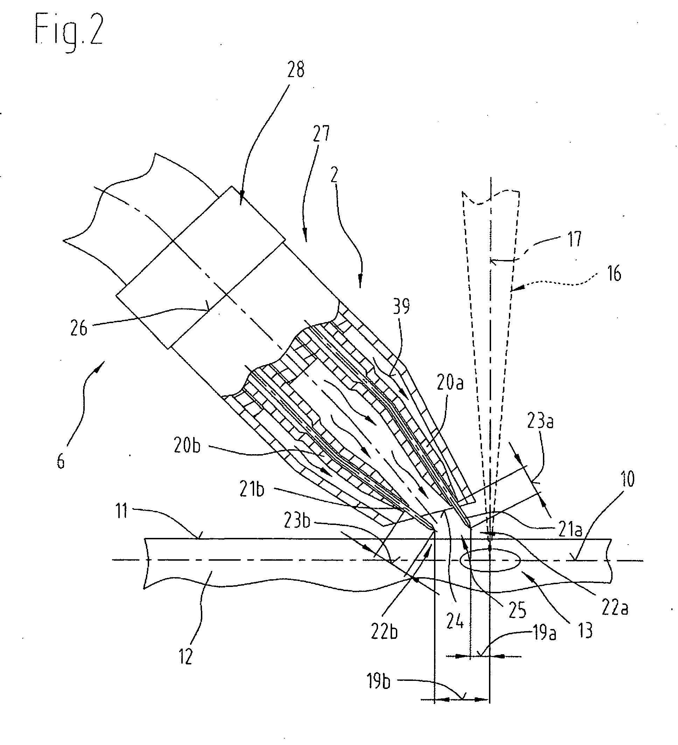

Der Laser 5 bzw. die optische Fokussiereinheit weist einen Fokusabstand 9, insbesondere eine Brennweite des Lasers 5 bzw. der optischen Fokussiereinheit, von einer Definitionsebene 10 oder einer Oberfläche 11 eines Werkstückes 12 auf, der beispielsweise 50 bis 400 mm beträgt. Hierbei wird die Definitionsebene 10 durch diesen Fokusabstand 9 bzw. durch die Brennweite gebildet, und die Oberfläche 11 des Werkstückes 12 wird identisch mit dieser ausgerichtet oder es wird ein den Fokusabstand 9 bildender Fokussierpunkt 13 außerhalb oder innerhalb des Werkstückes 12 angeordnet. Bei den dargestellten Beispielen der Fig. 1 und 2 ist eine Anordnung gezeigt, bei dem der Fokussierpunkt 13 unter der Oberfläche 11 des Werkstückes 12, also der Fokussierpunkt 13 im.Werkstück 12, angeordnet bzw. ausgerichtet wird.

Damit ein Schweißprozess mit sehr hoher Schweißqualität durchgeführt werden kann, sind die weiteren Anordnungen der weiteren Elemente bzw. Baugruppen zueinander wesentlich. Dabei ist im Beispiel der Schweißbrenner 6, insbesondere eine in Längsrichtung des Schweißbrenners 6 verlaufende Längsmittelachse 14 in einem Winkel 15, der z.B. zwischen 25° und 35° liegt, zu dem Laser 5 bzw. der optischen Fokussiereinheit, insbesondere zu einer im Zentrum einer Laserstrahlung 16 verlaufenden Laserachse 17, angeordnet, wobei die Laserachse 17 in einem Winkel 18 zwischen 80° und 100°, bevorzugt 90°, zu der Definitionsebene 6 und/oder der Oberfläche 11 des Werkstückes 12 steht.

Bei den dargestellten Beispielen der Fig. 1 und 2 ist die Darstellung des Werkstückes 12 in horizontaler Lage ersichtlich. Wird jedoch bei einem Schweißprozess die Lage des Werkstückes 12, insbesondere die der Oberfläche 11, verändert, so ist es erforderlich, dass der Laser 5, insbesondere die Laserachse 17, derartig zur Oberfläche 11 ausgerichtet wird, dass der Winkel 18 zwischen 80° und 100°, bevorzugt jedoch 90°, beträgt. Dies wird in einfacher Form durch eine entsprechende Programmierung der Schweißbahn des Roboters, insbesondere des Roboterarms 4, erreicht, so dass die einzelnen Baugruppen zueinander immer die gleichen Lagen, Abstände und Winkel ausbilden. Damit kann gesagt werden, dass die Laserachse 17 zu der Oberfläche 11 des Werkstückes 12 immer den gleichen voreingestellten Winkel 18 aufweist.

Aus Fig. 2 ist ersichtlich, dass ein aus dem Schweißbrenner 6 bzw. aus einem Kontaktrohr 20 austretender Schweißdraht 21 einen Abstand 19 zum von dem Laser 5 bzw. der optischen Fokussiereinheit abgegebenen Laserstrahl 16, insbesondere der im Laserstrahl 16 zentrisch verlaufenden Laserachse 17, aufweist. Allgemein sei angemerkt, dass die in den Fig. verwendeten Indizes a und b gleichartige Teile beschreiben, die in mehrfacher Ausführung im Schweißbrenner angeordnet sind, wobei diese mehrfach vorkommenden Teile jedoch nicht identisch ausgebildet sein müssen. Dies trifft beispielsweise auf die im gezeigten Beispiel in zweifacher Ausführung angeordneten Kontaktrohre 20a, 20b bzw. die Abstände 19a, 19b zu. Falls zum Verständnis nicht notwendig, wird nachfolgend gelegentlich auf die Angabe der Indizes verzichtet.

Bei dem dargestellten Zweidraht-Schweißbrenner 6 treten zwei Abstände 19a und 19b auf, die unterschiedlich sind. Die Richtungen der aus den Kontaktrohren 20a und 20b austretenden Schweißdrähte 21a und 21b stehen jedoch so zueinander, dass die Schweißdrähte 21a und 21b ein gemeinsames Schmelzbad ausbilden, an dem auch der Laserstrahl 16 beteiligt ist. Damit wird erreicht, dass bei einem Schweißprozess ein gemeinsames Schweißbad und ein gemeinsames Schweiß-Plasma, welche jedoch der Übersicht halber nicht dargestellt sind, geschaffen wird, d.h. dass ein Laserstrahl 16 und die Lichtbögen zeitgleich in einer Schweißzone bzw. in ein Schmelzbad mit gemeinsamen Schweiß-Plasma, also einer Schutzgashülle, einwirken, wobei sich die beiden Prozesse gegenseitig beeinflussen bzw. unterstützen. Werden die Abstände 19a, 19b zwischen den Schweißdrahtenden und der Laserachse 17 zu groß gewählt, so kann es nämlich passieren, dass der Laserstrahl 16 ein eigenes Schweißbad bzw. Schmelzbad bildet, welches für die nachfolgenden Lichtbogenschweißprozesse wieder abkühlt, und somit eine entsprechende Einbrandtiefe nicht mehr erzielt werden kann, wobei aufgrund des großen Abstandes zwischen den Lichtbögen und dem Laserstrahl dieser nicht in das Schweiß-Plasma des Lichtbogen-Schweißverfahrens hineinstrahlt. Selbstverständlich ist es möglich, dass die Abstände 19a, 19b nicht nur auf die Schweißdrahtenden 22a, 22b bezogen werden, sondern dass diese Abstände 19a, 19b auf die zwischen den Schweißdrähten 21a, 21b und dem Werkstück 12 gezündeten Lichtbögen übertragen werden, da für den Schweißprozess diese sehr wesentlich sind.

Um jedoch den Abstand 19a, 19b auf das Schweißdrahtende 22a, 22b beziehen zu können, weist der Schweißdraht 21a, 21b je eine Stickoutlänge 23a, 23b auf, die bevorzugt zwischen 10 und 14 mm liegt. Die Stickoutlänge 23a des ersten Schweißdrahts 21a kann sich dabei von der Stickoutlänge 23b des weiteren Schweißdrahts 21b unterscheiden. Die Einstellung der Stickoutlängen 23a, 23b kann durch die unterschiedlichsten bekannten Verfahren von Hand oder automatisch durchgeführt werden.

Da die Laserstrahlung 16 durch eine gebündelte Lichtstrahlung in den verschiedensten Wellenlängen gebildet wird, weist diese von dem Laser 5 bis zu dem Fokussierpunkt 13 eine kegelförmige bzw. eine sich von dem Laser 5 oder der optischen Fokussiereinheit zum Fokussierpunkt 13 verjüngende Form auf, wobei die größtmögliche Leistung bzw. Energiedichte des Lasers 5 im Fokussierpunkt 13 erreicht wird.

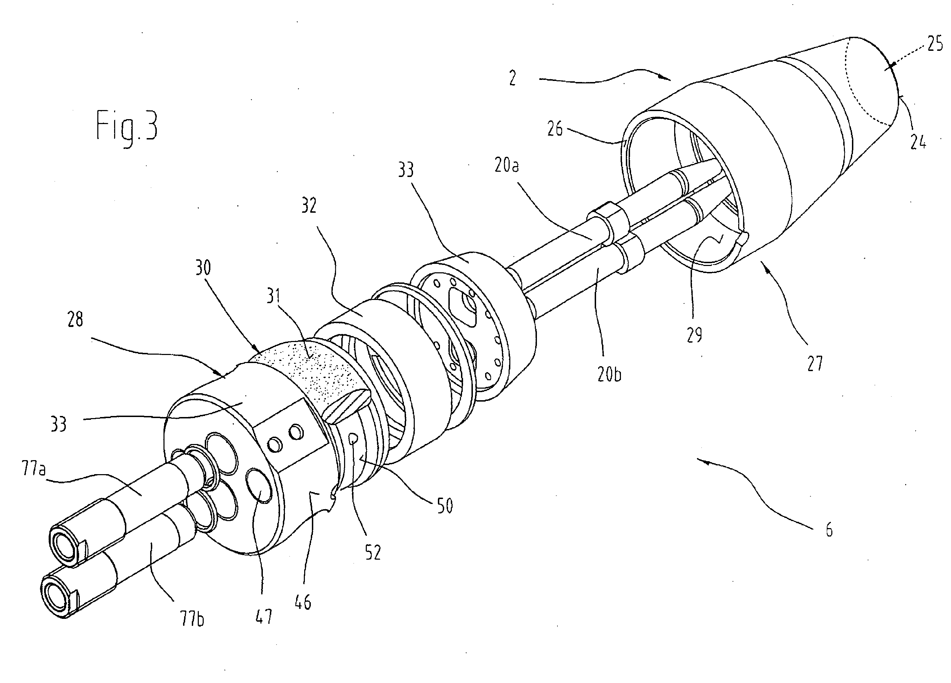

Aus Fig. 2 und 3 ist ersichtlich, dass die Gasdüse 2 im Bereich einer ersten Stirnseite 24 eine Austrittsöffnung 25 für den Schweißdraht 21 aufweist und die Gasdüse 2 an einer weiteren Stirnseite 26 einen Aufnahmebereich 27 zur Halterung an einem Inneneinsatz 28 des Schweißbrenners 6 aufweist. Der Aufnahmebereich 27 ist im Wesentlichen rohrförmig mit einer zylindrisch verlaufenden Innenfläche 29 ausgebildet.

In Fig. 3 ist eine Explosionsdarstellung des Schweißbrenners 6 ersichtlich. Im Bereich der Gasdüse 2 ist ein Fixierungselement 30 dargestellt, mittels dessen die Gasdüse 2 am Inneneinsatz 28 lösbar befestigt ist. Eine Verbindung zwischen der Gasdüse 2 und dem Inneneinsatz 28 wird hierbei zwischen einer Kontaktfläche 31 des Fixierungselements 30 und der Innenfläche 29 der Gasdüse 2 hergestellt. Die weiters dargestellten Komponenten, wie ein zylindrischer Dichtungsring 32, ein Gasverteilerring 33 mit kreisförmig angeordneten Gasdurchlassbohrungen, ein Sicherungsring, oder dgl. sind optional und aus dem Stand der Technik bekannt, weshalb auf eine nähere Beschreibung dieser Komponenten verzichtet wird. Es sei jedoch angemerkt, dass in der Gasdüse 1 und/oder dem Inneneinsatz 28 an unterschiedlichen Stellen, insbesondere im Bereich des Fixierungselements 30, umlaufende Dichtlippen zur Abdichtung angeordnet sind. An späterer Stelle werden die eingezeichneten Kontaktbuchsen 77a, 77b erwähnt.

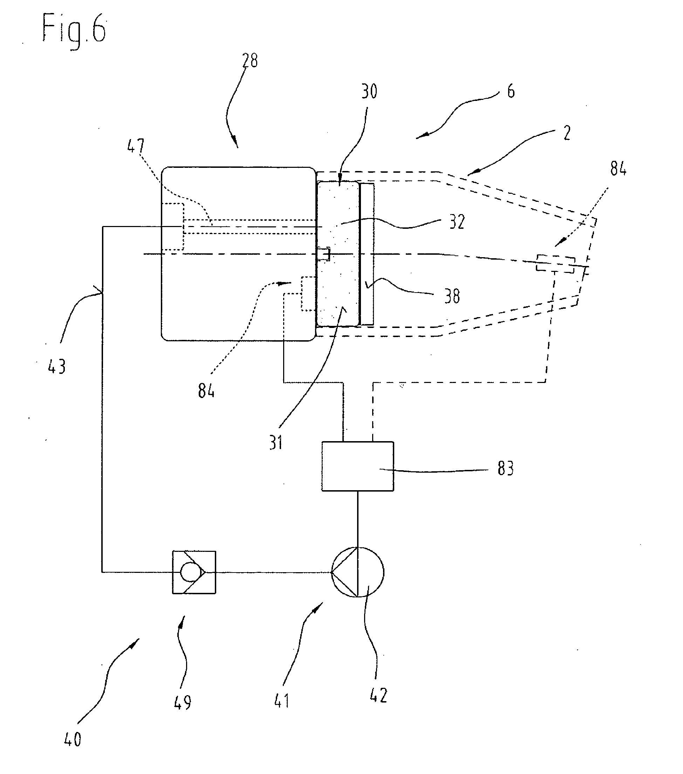

An der Gasdüse 2 kann im Aufnahmebereich 27 ein erstes Positionierungselement, insbesondere eine Ausnehmung oder ein Vorsprung, zur definierten Positionierung der Gasdüse 2 am Inneneinsatz 28 angeordnet sein. Im gezeigten Beispiel ist das Positionierungselement in Form einer Ausnehmung an der Stirnseite 26 der Gasdüse 2 angeordnet. Am Inneneinsatz 28 ist ein weiteres Positionierungselement, beispielsweise ein Vorsprung, angeordnet, welches mit dem ersten Positionierungselement in Verbindung steht. In Fig. 6 ist eine derartige Verbindung schematisch dargestellt.

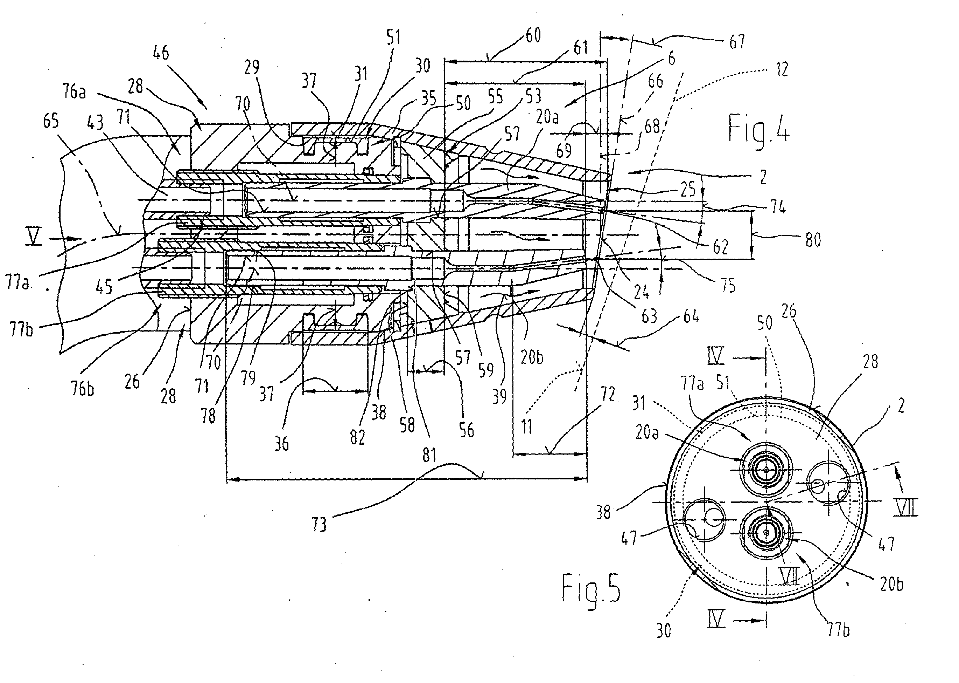

In Fig. 4 ist ein Schweißbrenner 6 im Bereich der Gasdüse 2 im Längsschnitt dargestellt. Das am Inneneinsatz 28 angeordnete Fixierungselement 30 ist gleichzeitig ein Dichtelement, welches eine gasdichte Verbindung zwischen der Gasdüse 2 und dem Inneneinsatz 28 herstellt. Besonders zweckmäßig ist hierbei eine Ausgestaltung des Fixierungselements 30, bei der dieses zumindest bereichsweise aus einem flexiblen, insbesondere dehnbaren bzw. elastischen, Material gebildet ist, d.h. das Fixierungselement 30 kann bei Bedarf die Gestalt seiner Außenoberfläche zumindest in einem Teilbereich verändern, insbesondere vergrößern oder verkleinern. Eine Kontaktfläche 31 des Fixierungselements 30, die an der Innenfläche 29 der Gasdüse 2 zur Bildung der Verbindung anliegt, kann somit in ihrer Lage relativ zur Innenfläche 29 verändert werden.

Durch die Form des Fixierungselements 30 kann der Zustand der Verbindung zwischen Gasdüse 2 und Inneneinsatz 28, insbesondere die Verbindungsfestigkeit, bestimmt werden. Die Verbindung kommt bevorzugt durch Druckkräfte bzw. Flächenpressung zwischen der Kontaktfläche 31 des Fixierungselements 30 und der Innenfläche 29 der Gasdüse 2 zustande. Es handelt sich hierbei um eine kraftschlüssige, insbesondere reibschlüssige Verbindung. Die Festigkeit der Verbindung ist dabei so gewählt, dass keine Kräfte, die zur Längsmittelachse 14 koaxiale Kraftkomponenten besitzen, d.h. Zugkräfte, über die Gasdüse 2 übertragen werden können. Die Gasdüse 2 kann bei aktiviertem Fixierungselement 30 also nicht vom Inneneinsatz 28 gelöst werden. Durch den Grad der Ausdehnung des expandierfähig ausgebildeten Fixierungselements 30 kann die Festigkeit der Verbindung bestimmt werden.

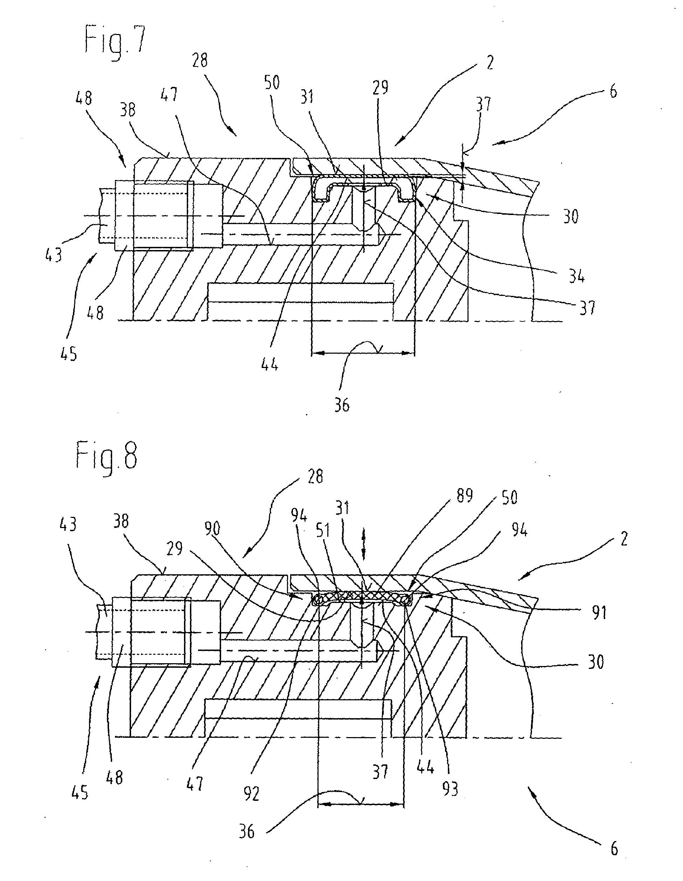

Eine einfache Ausgestaltungsmöglichkeit liegt darin, das Fixierungselement 30 durch einen ringförmigen Schlauch 34 oder ein Dichtungselement auszubilden, der bzw. das gegebenenfalls aus einem elastischen Material, beispielsweise einer Gummimischung, gebildet sein kann. Eine derartige Variante ist im Zuge der Fig. 7 näher beschrieben.

Aus Fig. 4 ist weiters ersichtlich, dass die Gasdüse 2 hülsenförmig ist und ein Gehäuse 35 aufweist, das auf einen schaftförmigen Längsabschnitt des Inneneinsatzes 28 aufgeschoben und über das Fixierungselement 30 an diesem befestigt ist. Im Aufnahmebereich 27 der Gasdüse 2 steht das Fixierungselement 30 mit der Kontaktfläche 31 des Fixierungselements 20 über einen Abschnitt 36 in Kontakt, wobei in diesem Abschnitt 36 die genannte Verbindung zustande kommt. Dabei ist die Kontaktfläche 31 durch eine resultierende Kraft, die in Richtung eines Pfeils 37 wirkt, an die Innenfläche 29 eines Gehäuses 35 der Gasdüse 2 gepresst. Die Pressverbindung wird also durch eine Lageveränderung der Kontaktfläche 31 in Richtung des Pfeils 37 erzeugt, wobei das Fixierungselement 30 zu diesem Zweck mit einem Medium zur Druckerzeugung, insbesondere einem Schutzgas oder Druckluft, beaufschlagt wird. Im Zuge der Beschreibung von Fig. 7 und 8 werden mögliche Varianten des Fixierungselements 30 als Schlauch 34, sowie als Membran 89 näher erläutert.

In Fig. 4, 5 und 6 ist gezeigt, dass sich das Fixierungselement 30 an einer Außenfläche 38 des Inneneinsatzes 28 ringförmig um dessen Umfang erstreckt. Die Kontaktfläche 31 bildet hierbei mit der Innenfläche 29 einen vollumfänglichen Kontaktschluss. Damit ist sichergestellt, dass ein innerhalb des hohlen Gehäuses 35 der Gasdüse 2 strömendes Schutzgas, beispielsweise ein Inertgas wie Argon, Helium oder ein Aktivgas wie CO₂ - symbolisiert durch einen Pfeil 39 - durch die Verbindung zwischen der Gasdüse 2 und dem Inneneinsatz 28 nicht entweichen kann.

Der Querschnitt des Fixierungselements 30, insbesondere des Schlauches 34, ist beispielsweise in etwa rechteckförmig oder U-förmig ausgebildet, so dass über den Abschnitt 36 die Kontaktfläche 31 eben ausgebildet ist und einen möglichst großflächigen Kontakt mit der Innenfläche 29 der Gasdüse 2 aufbauen kann. Jedoch ist auch die Verwendung von Fixierungselementen 30 mit gewölben oder profilierten Kontaktflächen 31 ohne weiteres möglich.

Die Kontaktfläche 31 des Fixierungselements 30 und/oder die Innenfläche 29 im Aufnahmebereich 27 der Gasdüse 2 können spezielle Strukturierungen aufweisen, um den Aufbau einer kraft- bzw. reibschlüssigen und/oder einer gasdichten Verbindung zu begünstigen. Beispielsweise können diese aufgeraut sein, eine die Haftung begünstigende Beschichtung oder einen Reibbelag oder Mikro- bzw. Nanostrukturen aufweisen. Derartige oder geeignete andere Ausgestaltungen sind dem auf dem Gebiet der Verbindungstechnik tätigen Fachmann aus dem Stand der Technik bekannt.

Das Fixierungselement 30 ist mit einer Versorgungseinrichtung 40 wirkungsverbunden, die bei Bedarf ein Medium zur Aktivierung bzw. Deaktivierung des Fixierungselements 30 bereitstellt und das Fixierungselement 30 mit diesem versorgt. In den in Fig. 3 bis 8 gezeigten Beispielen ist die Versorgungseinrichtung 40 durch einen pneumatischen oder hydraulischen Druckerzeuger 41, insbesondere eine Pumpe 42, gemäß Fig. 6 gebildet. Der Druckerzeuger 41 ist über eine Versorgungsleitung 43 zum Transport strömender Medien mit dem Fixierungselement 30 gekoppelt. Somit kann eine Innenfläche 44 eines nachgiebigen bzw. verformbaren Bereichs des Fixierungselements 30 mit einem Medium beaufschlagt werden, was die Ausdehnung des Fixierungselements 30 bzw. die Lageveränderung der Kontaktfläche 31 bewirkt.

Die Versorgungsleitung 43 ist über einen Kopplungsmechanismus 45, der z.B. als hohlzylindrisches Steck- oder Schraubelement mit einem Dichtungselement, ein Ventil oder dgl. ausgebildet ist, am Innenaufsatz 28 angeordnet. Weiters kann die Versorgungsleitung 43 über den Kopplungsmechanismus 45 direkt mit einem Hohlraum eines schlauchförmig ausgebildeten Fixierungselements 30 verbunden sein. Hierbei wird die Versorgungsleitung 43, die in Form eines Schlauches ausgebildet ist, in das Innere der Gasdüse 2 bzw. des Inneneinsatzes 28 geführt, oder es ist der Kopplungsmechanismus 45 an einer Außenseite 46 des Schweißbrenners 6 angeordnet, und die Versorgungsleitung 43 wird von außerhalb der Gasdüse 2 bzw. des Inneneinsatzes 28 zum Fixierungselement 30 hingeführt.

In den gezeigten Beispielen nach den Fig. 6 bis 8 ist im Inneneinsatz 28 ein Strömungskanal 47 angeordnet, der einerseits in den Bereich der Innenfläche 44 des Fixierungselements 30 mündet und andererseits mit dem Druckerzeuger 41 strömungsverbunden ist. Der Strömungskanal 47 ist beispielsweise durch eine oder mehrere zylindrische Bohrungen im Inneneinsatz 28 gebildet. Zur Herstellung einer Verbindung des Strömungskanals 47 mit der Versorgungsleitung 43 ist eine Muffe 48 des Kopplungsmechanismus 45 vorgesehen, die bevorzugt über ein Dichtungselement verfügt, so dass eine gasdichte, mechanische Verbindung herstellbar ist.

Zum Kopplungsmechanismus 45 sei angemerkt, dass dieser in Form einer dem Stand der Technik bekannten Kupplung zum abgedichteten und lösbaren Verbinden zweier einen Druck führenden Leitungen gebildet ist. Ausführungen als Steck-, Rast-, Schrumpf-, Schraubverbindungen usw. sind hierbei möglich, wobei diese dem Fachmann aus dem Stand der Technik geläufig sind.

Anstelle eines Strömungskanals 47 können auch ausschließlich Strömungsleitungen im Schweißbrenner 6 verlegt sein, beispielsweise flexible Kunststoff- oder Gummileitungen, die dieselbe Funktion wie der Strömungskanal 47 erfüllen.

Wie in Fig. 6 gezeigt, ist der Versorgungsvorrichtung 40 oder dem Fixierungselement 30 bevorzugt ein Ventil 49 zugeordnet, das zur Entlüftung des Strömungskanals 47 bzw. des Fixierungselements 30 vorgesehen ist. Im Beispiel nach Fig. 6 ist das Ventil 49 in der Versorgungsleitung 43 angeordnet und als entsperrbares Rückschlagventil ausgebildet. Somit kann die Versorgungsleitung 43 als gemeinsame Hin- und Rückleitung vorgesehen sein, da beim Entlüften das Ventil 49 entsperrt werden kann und der am bzw. im Fixierungselement 30 anliegende Überdruck abgebaut werden kann, wodurch die Verbindung über das Fixierungselement 30 gelöst wird. Ebenso besteht durch ein derartiges Ventil 49 der Vorteil, dass der Druckerzeuger 41 nur zum Aktivieren des Fixierungselements, beispielsweise zum Aufpumpen des Schlauches 34, in Betrieb sein muss, und bei ausreichender Druckbeaufschlagung der Druck durch das Rückschlagventil aufrecht erhalten wird, ohne dass der Druckerzeuger 41 aktiviert sein muss.

Selbstverständlich sind auch Varianten möglich, bei denen eigene Entlüftungsvorrichtungen bzw. eigene Hin- und Rückleitungen für das Fixierungselement 30 vorgesehen sind, so dass ein Rückschlagventil nicht notwendig ist.

Die Versorgungseinrichtung 40 ist in einer besonders vorteilhaften Variante bei einem Laser-Hybrid-Schweißprozess durch eine Druckluftanlage gebildet. Der Laser-Hybrid-Schweißkopf 1 verfügt über den vorstehend erwähnten Crossjet 7, der im Wesentlichen ein quer zur Laseroptik strömender Luftdruckstrahl ist, welcher die Laseroptik vor Verunreinigung schützt. Die im Laser-Hybrid-Schweißkopf 1 ohnehin vorhandene Druckluftversorgung für den Crossjet 7 kann somit auch als Versorgungsvorrichtung 40 für das Fixierungselement 30, wie diese vorstehend beschrieben wurde, verwendet werden. Bei einer derartigen Variante ist ein eigener Druckerzeuger 41 speziell für das Fixierungselement 30 nicht zwingend erforderlich, sondern es kann die Crossjet-Druckluftanlage über eine Leitung mit dem Fixierungselement 30 strömungsverbunden sein. Zur Steuerung des Zustandes des Fixierungselements 30 kann dieser Strömungsverbindung ein Steuerventil zugeordnet sein, welches ein be- und/oder entlüften des schlauchartigen Fixierungselements 30 ermöglicht. Eine weitere Möglichkeit besteht darin, die vorhandene Strömung des Schutzgases gemäß Pfeil 39 für das Fixierungselement 30 zu nutzen. Als Druckmedium zum Befüllen bzw. Expandieren des Fixierungselements 30 wird hierbei das Schutzgas 39 verwendet. Ein Teil des Schutzgases 39 kann dem Fixierungselement 30 hierzu gezielt über den Strömungskanal 47 bzw. einer Versorgungsleitung zugeführt werden. Gegebenenfalls kann zusätzlich ein Druckerzeuger angeordnet sein, um den notwendigen Druck der Schutzgasströmung zu verstärken.

Wie aus Fig. 3 bis 8 ersichtlich, ist das Fixierungselement 30 bevorzugt in einer umlaufenden Ausnehmung 50, die an der Außenseite 46 des Inneneinsatzes 28 vorgesehen ist, angeordnet. Die Ausnehmung 50 ist dabei nutförmig ausgebildet, und eine Begrenzungsfläche 51 der Ausnehmung 50 kann eine mit dem Strömungskanal 47 bzw. der Versorgungsleitung 40 verbundene Öffnung 52 aufweisen.

Das Fixierungselement 30 ist gegebenenfalls in der Ausnehmung 50 befestigt, beispielsweise durch Kleben oder durch die mechanische Verbindung über den Kopplungsmechanismus 45, der gleichzeitig die erforderliche Strömungsverbindung herstellt. Eine eigene Verbindung zwischen dem Innenaufsatz 28 und dem Fixierungselement 30 muss jedoch nicht zwangsweise vorhanden sein, da ein einfaches Einlegen des ringförmigen Fixierungselements 30 durch Aufziehen auf den Inneneinsatz 28 mit einer mechanischen Vorspannung bereits eine ausreichende Befestigung in der Ausnehmung 50 ergeben kann.

Zum Fixierungselement 30 sei angemerkt, dass dieses zumindest teilweise aus einem hitzebeständigen Material ausgebildet sein kann, oder am Inneneinsatz 28, beispielsweise in der Ausnehmung 50, ein wärmeisolierendes Material angeordnet ist, so dass die Funktion des Fixierungselements 30 durch die im Bereich der Gasdüse 2 vorherrschende Hitze nicht beeinträchtigt wird.

In einer eigenständigen, Variante ist im Inneren bzw. dem inneren Hohlraum des Gehäuses 35 der hülsenförmigen Gasdüse 2 ein Aufnahmeelement 53 für ein oder mehrere Kontaktrohr(e) 20 angeordnet. Das Aufnahmeelement 53 hält das bzw. die Kontaktrohr(e) 20 innerhalb der Gasdüse 2 in einer definierten bzw. definierbaren Position. Das Aufnahmeelement 53 ist dabei so ausgebildet, dass das bzw. die Kontaktaktrohr(e) 20 vom Gehäuse 35 elektrisch isoliert sind. Falls mehrere Kontaktrohre 20 durch das Aufnahmeelement 53 gehalten werden, sind diese durch das Aufnahmeelement 53 voneinander isoliert.

Es ist im Aufnahmeelement 53 bevorzugt je eine Ausnehmung 54, insbesondere eine Bohrung, für jedes Kontaktrohr 20 angeordnet, in der dieses befestigt ist. Das Kontaktrohr 20 kann beispielsweise in die Ausnehmung 54 eingepresst sein. Ebenso ist ein Verschrauben, Verriegeln, usw. des Kontaktrohrs 20 mit dem Aufnahmeelement 53 möglich.

Zum Zweck der Isolation kann das Aufnahmeelement 53 aus einem nichtleitenden Isolationsmaterial, beispielsweise aus Kunststoff, Keramik, usw., gebildet sein. Ebenso kann in die Ausnehmung 54 des Aufnahmeelements 53 eine oder mehrere isolierende Buchse(n) oder dgl. zur Kontaktrohraufnahme eingesetzt sein. In diesem Fall kann der Körper des Aufnahmeelements 53 auch aus leitendem Material, beispielsweise einem Metall, gebildet sein.

Wie aus Fig. 4 ersichtlich, ist das Aufnahmeelement 53 beispielsweise im Wesentlichen scheiben- bzw. plattenförmig ausgebildet. Das Aufnahmeelement 53 ist in Form eines Einsatzes 55 in der Gasdüse 2 angeordnet. Der Einsatz 55 weist zumindest eine diesen über dessen Breite 56 vollständig durchsetzende Bohrung 57 auf. Nachfolgend wird die Erfindung anhand des in Fig. 4 gezeigten Beispiels, bei dem zwei Kontaktrohre 20 durch den Einsatz 55 gehalten werden, d.h. zwei Bohrungen 57 im Einsatz 55 vorgesehen sind, näher erläutert.

Der Einsatz 55 kann entweder einstückig mit dem Gehäuse 35 der Gasdüse 2 ausgebildet sein, oder als eigener Bauteil im Innenraum der Gasdüse 2 befestigt sein. Die Kontaktrohre 20a, 20b ragen gegenüber Breitseiten 58, 59 des Einsatzes 55 heraus. Bedeutsam sind hierbei die Maße 60, 61, welche den Abstand zwischen Austrittsstellen 62, 63 der Schweißdrähte 21a, 21b aus den Kontaktrohren 20a, 20b und der der Austrittsöffnung 25 der Gasdüse 2 zugewandten Breitseite 59 des Einsatzes 55 definieren. Durch Variation der Abstände 60, 61 kann ein wesentlicher Einfluss auf den Schweißprozess genommen werden, da die Stickoutlängen 23a, 23b der Schweißdrähte 20a, 20b verändert werden. Allgemein kann durch Variation der Stickoutlänge 23 ein Schweißprozess in vielfältiger Weise, beispielsweise hinsichtlich des Abschmelzvolumens des Schweißdrahtes 20 und der Spaltüberbrückbarkeit am Werkstück 12, beeinflusst werden.

Im gezeigten Beispiel sind die Abstände 60 und 61 unterschiedlich groß, wobei der Abstand 61 des zweiten Kontaktrohres 20b kleiner ist als der Abstand 60 des ersten Kontaktrohres 20a. Dies erweist sich bei einer gegenüber dem Werkstück 12 schrägen Haltung des Schweißbrenners 6 (siehe auch Winkel 15 in Fig. 1) als vorteilhaft, da die Stickoutlängen 23a, 23b der Schweißdrähte 20a, 20b in etwa gleich sein können und der Schweißbrenner 6 in einem geringen Abstand 62 an der Oberfläche 11 entlang bewegt werden kann, wodurch der Schweißprozess insgesamt verbessert wird.

Als besonders vorteilhaft erweist sich in diesem Zusammenhang eine weitere, eigenständige Variante der vorliegenden Erfindung. Hierbei handelt es sich um eine Gasdüse 2 für Mehrdraht-Schweißbrenner, insbesondere für einen Laser-Hybrid-Schweißprozess. Das Gehäuse 35 der Gasdüse 2 erstreckt sich insbesondere rotationssymmetrisch entlang einer Längsmittelachse 65. Die erste Stirnseite 24 mit der Austrittsöffnung 25 verläuft hier in einer schräg zur Längsmittelachse 65 liegenden Ebene 66. Ein Winkel 67 zwischen einer rechtwinkelig auf die Längsmittelachse 65 stehenden Normalebene 68 und der Ebene 66 ist hierbei durch die Abstände 60, 61 der Kontaktrohre 20a, 20b bestimmt. Es erstreckt sich die Ebene 66 bzw. die Stirnseite 24 von der äußeren Schweißdraht-Austrittsstelle 62 des ersten Kontaktrohres 20a in Richtung der weiteren Schweißdraht-Austrittsstelle 63 des weiteren Kontaktrohres 20b, die in Richtung der Längsmittelachse 65 in Richtung der zweiten Stirnseite 26 der Gasdüse 2 um einen Differenzabstand 69 zurückversetzt ist.

Der Winkel 67 zwischen der Normalebene 68 und der schräg liegenden Ebene 66 beträgt beispielsweise zwischen 5° und 60°, bevorzugt zwischen 5° und 30°.

Bei einer derartigen Ausgestaltung der Gasdüse 2, welche an unterschiedliche Abstände der Austrittsstellen 62, 63 zweier Kontaktrohre 20a, 20b angepasst ist, wird die Zugänglichkeit des schräg gehaltenen Schweißbrenners 6 zum Werkstück 12 verbessert, so dass durch variablere Einstellung des Abstandes 64 eine Optimierung und Flexibilisierung des Schweißprozesses mit mehreren abschmelzenden Schweißdrähten möglich ist.

Eine weitere eigenständige Lösung der erfindungsgemäßen Aufgabe ist ebenfalls in den Fig. 4, 9 und 10 gezeigt. Es handelt sich hierbei um einen Schweißbrenner 6 bzw. ein Kontaktrohr 20, insbesondere für einen Laser-Hybrid-Schweißprozess, der Komponenten zur Durchführung eines Lichtbogen-Schweißprozesses mit abschmelzender Elektrode aufweist. Dabei ist bzw. sind eine oder mehrere der Komponente(n) durch das Kontaktrohr 20 - hier die Kontaktrohre 20a und 20b - gebildet, das eine sich entlang einer Längsmittelachse 70 des bzw. der Kontaktrohr(s)(e) 20 erstreckende Führungsbohrung 71 für den Schweißdraht 21 aufweist. Wesentlich ist dabei, dass das zumindest eine Kontaktrohr 20 eine wenigstens abschnittsweise kurvenförmige Längsmittelachse 70 der Führungsbohrung 71 aufweist, d.h. die Führungsbohrung 71 verläuft nicht ausschließlich geradlinig, sondern ist zumindest in einem Teilabschnitt 72 einer Kontaktrohrlänge 73 abgewinkelt bzw. gebogen. Diese Variante wird im Folgenden wiederum für einen Mehrdraht-Schweißprozess mit zwei Schweißdrähten 21a, 21b und zwei Kontaktrohren 20a, 20b beschrieben.

Die Kontaktrohre 20a, 20b weisen je einen Endbereich auf, in dem die Austrittsstellen 62, 63 der Schweißdrähte 21a, 21b liegen, wobei der Teilabschnitt 72 in diesen Endbereichen liegt. Bei zumindest einem der beiden Kontaktrohre 20a, 20b verläuft die Längsmittelachse 70 bzw. die Führungsbohrung 71 im Längsverlauf bogenförmig bzw. abgewinkelt. Bevorzugt sind beide Kontaktrohre 20a, 20b im Teilabschnitt 72 gegenüber der restlichen Kontaktrohrlänge 73 abgewinkelt. Der Schweißdraht 21a, 21b tritt somit nicht parallel zur Längsmittelachse 70 der Kontaktrohre 20a, 20b aus, sondern in einem Austrittswinkel 74, 75 zur Längsmittelachse 70. Die Schweißdrähte 21a, 21b werden somit schräg zur Längsmittelachse 65 der Gasdüse 2 in Richtung des Werkstückes 12 gefördert. Die Schweißdrähte 21a und 21b konvergieren dabei in Richtung des Werkstücks 12.

Die Kontaktrohre 20a, 20b können in je einer Halterung 76a, 76b, insbesondere je einer Kontaktbuchse 77a, 77b, um ihre Längsmittelachse 70 drehbar gelagert sein. Insbesondere können die Kontaktrohre 20a, 20b in einem Winkel von 360° rotierbar sein. Wie in Fig. 4 gezeigt, können Kontaktflächen 78 der Kontaktrohre 20a, 20b und Kontaktflächen 79 der Kontaktbuchsen 77a, 77b, welche sich zur Stromübertragung berühren, unter Gleitreibung relativ zueinander stufenlos verdreht werden. Hierbei werden auch die Winkel 74, 75 der gebogenen Kontaktrohre 20a, 20b und somit die Austrittsrichtungen der Schweißdrähte 21a, 21b verändert und es wird ein Abstand 80 der Austrittsstellen 62, 63 zueinander verändert. Durch Einstellung der Winkel 74, 75 bzw. durch Einstellung des Abstandes 80 kann daher Einfluss auf die Drahtzufuhr zum Schmelzbad genommen werden, wodurch in vorteilhafter und einfacher Weise eine zusätzliche Eingriffsmöglichkeit in den Schweißprozess geschaffen wird.

Das Aufnahmeelement 53 kann zur Befestigung der Kontaktrohre 20a, 20b in Längsrichtung Haltefortsätze 81 aufweisen, die beispielsweise eine Anschlagfläche 82, an denen sich das jeweilige Kontaktrohr 20a, 20b abstützt, aufweisen. Die Kontaktrohre 20a, 20b sind somit in Richtung der Längsmittelachse 70 fixiert. Bevorzugt sind zur besseren Fixierung in den Kontaktbuchsen 77a, 77b Lamellen, nicht dargestellt, angeordnet.

Eine weitere Möglichkeit der Veränderung der Austrittswinkel 74, 75 bzw. des Abstandes 80 liegt darin, dass der Umfang der Außen- bzw. Kontaktfläche 78 der Kontaktrohre 20a, 20b eine polygonale Umfangskontur aufweist, die in einer kongruenten Konturform der Kontaktfläche 79 der Kontaktbuchse 77 anordenbar ist. Durch die Anzahl der Ecken bzw. Seiten des Polygons ist somit die Anzahl der möglichen Positionen, d.h. Austrittswinkel 74, 75, bestimmt. Es ist somit eine abgestufte Änderung der Stellungen der Kontaktrohre 20a, 20b zueinander möglich, z.B. kann ein viereckig ausgebildeter Schaft des Kontaktrohres 20 in vier Stellungen in die Kontaktbuchse 77 eingesetzt werden, so dass sich je vier unterschiedliche Austrittswinkel 74, 75 der Schweißdrähte 21a, 21b bzw. sechzehn unterschiedliche Abstände 80 zwischen den Austrittsstellen 62, 63 einstellen lassen.

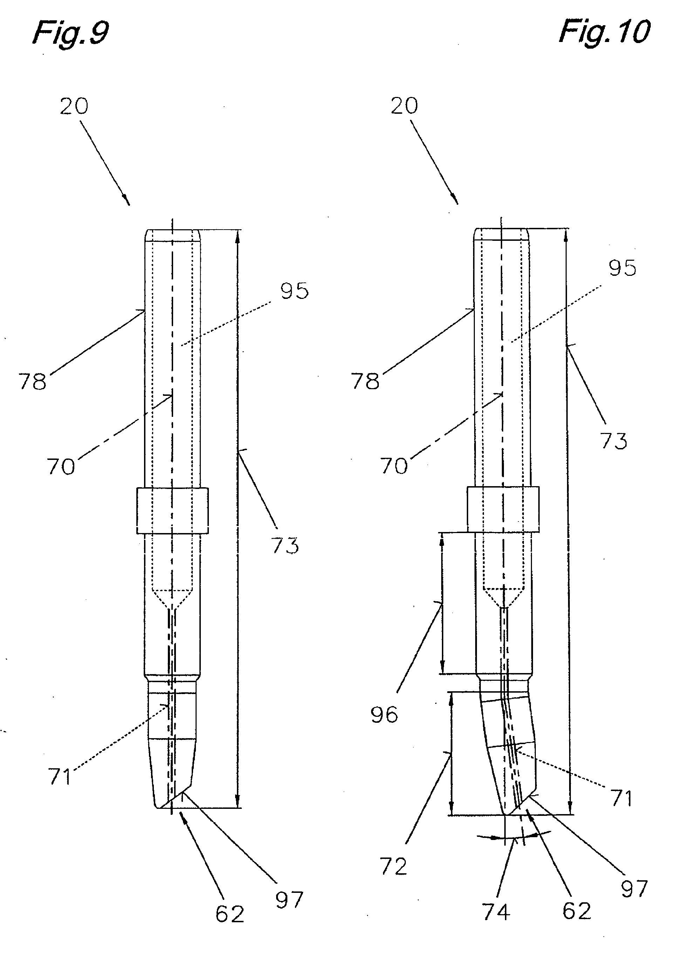

Hierzu ist in den Fig. 9 und 10 das Kontaktrohr 20 dargestellt und beschrieben.

Weiters ist ein Gasdüsenaufsatz für einen Schweißbrenner dargestellt, der eine Gasdüse 2 bzw. ein oder mehrere Kontaktrohre 20, die zumindest teilweise der vorstehenden Beschreibung entsprechen, aufweist und somit eine modulartige Einheit bildet. Dies ist in Bezug auf die automatisierte Handhabung der auszutauschenden Komponenten bei der Reinigung bzw. Wartung des Schweißbrenners vorteilhaft, da weniger Einzelteile ausgetauscht werden müssen.

Die vorliegende Erfindung betrifft ein Verfahren zur Prozesssteuerung einer Schweißanlage, das anhand der Fig. 1 und 6 beschrieben wird. Hierzu weist die zum Bahnschweißen vorgesehene Schweißanlage, welche aus dem Schweißgerät mit dem Schweißbrenner 6 bzw. dem Laser-Hybrid-Schweißkopf 1 und einer Roboteranlage besteht, eine Steuervorrichtung 83 auf. Grundsätzlich ist der Schweißbrenner 6 am Roboterarm 4 bzw. Manipulator befestigt und die Bewegungsbahn des Roboterarms 4 wird durch die Steuervorrichtung 83 festgelegt. Der Schweißbrenner 6 weist hierbei in einem Austrittsbereich des Schweißdrahtes 21 die bei Bedarf lösbare Gasdüse 2 auf.

Der Gasdüse 2 und/oder dem Inneneinsatz 28 ist gegebenenfalls zumindest ein Sensor 84 zugeordnet, der Prozessparameter des Schweißprozesses erfasst. Der Sensor 84 ist insbesondere zur Erfassung von Parametern betreffend den Materialverschleiß bzw. den Verschmutzungsgrad im Bereich der Kontaktrohre 20, insbesondere den Austrittsstellen 62, 63 für den Schweißdraht 21, ausgebildet. Weiters kann durch den Sensor 84 gegebenenfalls erfasst werden, ob die Gasdüse 2 am Inneneinsatz 28 korrekt befestigt oder entfernt ist. Der Sensor 84 ist mit der Steuervorrichtung 83 des Schweißgeräts verbunden, welche den Schweißprozessablauf steuert. Wird nun ein unzulässiger Prozesszustand, beispielsweise eine zu große Verunreinigung, detektiert, wird durch die Steuervorrichtung 83 ein Wartungsablauf eingeleitet.

Es sei angemerkt, dass dieser Wartungsablauf gemäß der Erfindung auch ohne das Vorhandensein eines Sensors zu definierbaren Zeitpunkten oder nach einer gewissen Anzahl von Arbeitsschritten periodisch eingeleitet werden kann.

Wird durch die Steuervorrichtung 83 der Wartungsablauf des Schweißprozesses gestartet, erfolgt eine Positionierung des Schweißbrenners in einer Wartungsposition, worauf von der Steuervorrichtung das am Schweißbrenner 6 angeordnete Fixierungselement 30 für die Gasdüse 2 bzw. den Gasdüsenaufsatz deaktiviert wird. Die Verbindung zwischen der Gasdüse 2 und einem Inneneinsatz 28 des Schweißbrenners 6 wird dabei durch räumliche Verkleinerung eines Fixierungselements 30 des Schweißbrenners 6 gelöst, worauf die Gasdüse 2 vom Schweißbrenner 6 entfernt wird. Hierzu kann die Gasdüse 2 vom Inneneinsatz 28 mittels einer Abziehvorrichtung abgezogen werden, oder es wird der Schweißbrenner 6 in eine derartige Lage schräg gestellt, dass die Gasdüse 2 von selbst vom Inneneinsatz 28 fällt bzw. rutscht. Anschließend wird eine andere Gasdüse 2 am Schweißbrenner 6 positioniert und durch das Fixierelement 30 am Innenaufsatz 28 befestigt. Die Befestigung zwischen der Gasdüse 2 und einem Inneneinsatz 28 des Schweißbrenners 6 erfolgt durch räumliche Ausdehnung des Fixierungselements 30, wobei eine insbesondere gasdichte Verbindung hergestellt wird.

Die Einleitung des Wartungsablaufs erfolgt dadurch, dass durch die Steuervorrichtung 83 des Schweißgeräts ein Signal bzw. eine Signalfolge zur Steuerung des Antriebs des Roboterarms 4 generiert wird, so dass der Schweißbrenner 6 in die Wartungsposition bewegt wird. Weiters wird ein Signal zur Steuerung der Versorgungseinrichtung 40 generiert, wodurch der Zustand des Fixierungselements 30, d.h. ob dieses aktiviert oder deaktiviert ist, festgelegt wird. Beispielsweise kann das Ventil 49 der Versorgungseinrichtung 40 zum Deaktivieren des Fixierungselements 30 geöffnet werden, so dass der am bzw. im Fixierungselement 30 anliegende Überdruck abgebaut wird und sich das Volumen des Fixierungselements 30 verkleinert bzw. die Kontaktfläche 31 des Fixierungselements 30 von der Innenfläche 29 der Gasdüse 2 wegbewegt wird. Weiters kann der Druckerzeuger 41, insbesondere die Pumpe 42, angesteuert werden, um das Fixierungselement 30 zu aktivieren, indem ein Überdruck erzeugt und über die Versorgungsleitung 43 dem Fixierungselement 30 zugeführt wird, worauf dieses zumindest bereichsweise gedehnt oder aus einem in sich zusammengefallenen bzw. zusammengefaltenen Zustand expandiert wird. Somit wird durch Ausdehnung des Fixierungselements 30 eine kraftschlüssige, insbesondere reibschlüssige, Verbindung zwischen der Gasdüse 2 und dem Inneneinsatz 28 hergestellt.

Es sei angemerkt, dass an diesem Ablauf mehrere miteinander kommunizierende Steuervorrichtungen, beispielsweise des Schweißgeräts und der Robotersteuerung, beteiligt sein können, worauf an dieser Stelle nicht näher eingegangen wird.

In der Wartungsposition wird der Schweißbrenner 6 beispielsweise in einer nicht näher dargestellten Reinigungsstation der Roboteranlage positioniert. In der Reinigungsstation sind an definierten Koordinaten für die Robotersteuerung Ersatz-Gasdüsen 2 platziert und Ablagepositionen für gebrauchte Gasdüsen 2 definiert, so dass der Wartungsablauf vollautomatisch ablaufen kann.

In Fig. 7 ist eine Variante des Schweißbrenners 6 dargestellt, bei der das Fixierungselement 30 als Schlauch 34 ausgebildet ist.

Der Schlauch 34 weist einen Hohlraum 85 auf, der von einem Mantel 86 mit einer Wandstärke 87 umhüllt ist. Der Mantel 86 weist dabei die Kontaktfläche 31 und die Innenfläche 44, welche den Hohlraum 85 begrenzt, auf. Der Mantel 86 ist aus einem flexiblen Material gebildet, das insbesondere nachgiebig bzw. elastisch ist.

Der Hohlraum 85 des Schlauchs 34 ist mit der Versorgungseinrichtung 40 verbunden, so dass die Innenfläche 44 wie vorstehend beschrieben mit einer Kraft in Richtung des Pfeils 37 beaufschlagt werden kann. Der Schlauch 34 weist hierzu eine Öffnung 88 auf, die den Hohlraum 85 nach außen hin freigibt und die mit dem Strömungskanal 47 bzw. der Versorgungsleitung 43 verbunden ist. Der Hohlraum 85 bildet somit eine Druckkammer.

Zum Aktivieren des Fixierungselements 30 wird der Hohlraum 85 des Schlauchs 34 mit dem Medium zur Druckerzeugung befüllt. Das Volumen des Hohlraums 85 wird somit vergrößert, wodurch sich im Querschnitt die Fläche des Schlauches 34 soweit vergrößert, bis die Kontaktfläche 31 des Schlauches 34 mit der Innenfläche 29 der auf den Inneneinsatz 28 aufgeschobenen Gasdüse 2 ausreichend fest in Kontakt steht.

Der Schlauch 34 bzw. das Dichtungselement kann beispielsweise aus Ethylen-Propylen-Dien-Monomer oder Silikon, Kautschuk, einem Kunststoff, Glas- oder Naturfasern, einem Gewebe oder dergleichen bzw. aus Mischungen aus diesen Materialien gebildet sein. Dabei kann der Schlauch 34 dehnbar und gegebenenfalls elastisch sein, so dass die Wandstärke 87 des Schlauches 34 bei Volumensausdehnung des Schlauches 34 verringert wird. Weiters kann der Schlauch 34 flexibel, jedoch nicht dehnbar sein, so dass es im deaktivierten Zustand des Fixierungselements 30, d.h. bei entlüftetem bzw. entleertem Hohlraum 85 des Schlauchs 34, zu einer Faltenbildung im Schlauch 34 kommt.

In Fig. 8 ist eine weitere Variante des Schweißbrenners 6 mit dem Fixierungselement 30 zum Befestigen der Gasdüse 2 am Inneneinsatz 28 dargestellt. Hierbei ist das Fixierungselement 30 durch eine Membran 89 gebildet. Die Membran 89 ist aus flexiblem Material gebildet und weist die Kontaktfläche 31 und die Innenfläche 44 auf, wobei die Kontaktfläche in Richtung eines dargestellten Doppelpfeils beweglich ist. Zur Erweiterung der Membran 89 wird auf die Innenfläche 44 eine Kraft in Richtung des Pfeils 37 ausgeübt, so dass die Kontaktfläche 31 nach außen gedrückt wird, wie dies vorstehend beschrieben wurde. Hierzu wird ein Überdruck unterhalb der Innenfläche 44 angelegt, wobei zu diesem Zweck die vorstehend beschriebene Versorgungsvorrichtung 40 mit der Membran 89 wirkungsgekoppelt ist. Ist nun die Gasdüse 2 auf den Inneneinsatz 28 geschoben, wird durch Druckbeaufschlagung der Membran 89 zwischen der Kontaktfläche 31 der Membran 89 und der Innenfläche 29 der Gasdüse 2 eine kraftschlüssige Verbindung hergestellt, welche bevorzugt auch gasdicht ist. Das Verbindungsprinzip entspricht dabei der in den Fig. 3 bis 6 beschriebenen Varianten, so dass vorstehend beschriebene Komponenten bzw. Varianten auch auf die in Fig. 8 gezeigte Lösung übertragbar sind.

Wie gezeigt, ist die Membran 89 in der nutförmigen Ausnehmung 50, die den Umfang des Inneneinsatzes 28 umläuft, angeordnet. Die Membran 89 umhüllt den Innenaufsatz 28 über den Abschnitt 36 vollumfänglich, so dass die Membran 89 die Gestalt eines zylindrischen Rohrabschnitts besitzt. Die Membran 89 liegt in Randbereichen 90, 91 linien- oder flächenförmig an der Begrenzungsfläche 51 unter Bildung von Kontaktstellen 92, 93 auf, so dass die Begrenzungsfläche 51 der Ausnehmung 50 vollumfänglich umschlossen ist. Die Kontaktstellen 92, 93 sind hierbei gasdichte Verbindungsstellen zwischen der Membran 89 und dem Inneneinsatz 28. Zur Herstellung derartiger Kontaktstellen 92, 93 kann die Membran 89 Verbindungselemente 94 z.B. federartig wirkende, ringförmige Zugelemente, die die Randbereiche 90, 91 der Membran 89 auf die Begrenzungsfläche 51 der Ausnehmung 50 im Inneneinsatz 28 pressen, oder stoffschlüssige Klebeelemente usw. aufweisen.

Der Inneneinsatz 28 kann wiederum den Strömungskanal 47 aufweisen, der unterhalb der Innenfläche 44 der Membran 89 in die Öffnung 52 der Ausnehmung 89 mündet. Über den Strömungskanal 47 bzw. die Versorgungsleitung 43 wird beim Aktivieren des Fixierungselements 30 die Druckkraft durch Anlegen eines Überdrucks an die Innenfläche 44 der Membran 89 übertragen, worauf sich diese in Richtung des Pfeils 37 ausdehnt. Beim Deaktivieren des Fixierungselements 30 wird der Überdruck im Strömungskanal 47 bzw. der Versorgungsleitung 43 abgebaut.

Es sei eine weitere, nicht dargestellte Variante erwähnt, bei der das Fixierungselement 30 einen mechanischen Schieber oder dgl. aufweist, der durch Anlegen eines Überdrucks mittels der Versorgungseinrichtung 40 in einer Führung verschiebbar ist, so dass dieser mit der Gasdüse 2 in Eingriff gerät und diese befestigt. Der Eingriff bzw. die Befestigung kann dabei formschlüssig oder kraftschlüssig sein.

In Fig. 9 und 10 ist das Kontaktrohr 20 für einen Ein- oder Mehrdraht-Schweißbrenner 6 oder einen Laser-Hybrid Eindraht- oder Mehrdraht-Schweißkopf 1 dargestellt, wobei in Fig. 9 das Kontaktrohr 20 in ursprünglicher Form und in Fig. 10 das Kontaktrohr 20 nach einem Bearbeitungsschritt zur Bildung einer Biegung dargestellt ist.

Hierbei weist das Kontaktrohr 20 eine durchgängige Führungsbohrung 71 mit einer Längsmittelachse 70 für den Schweißdraht 21 und bevorzugt eine zur Führungsbohrung 71 konzentrische Bohrung 95 mit größerem Durchmesser auf, wie dies strichliert dargestellt ist. Weiters ist das Kontaktrohr 20, wie bereits zuvor beschrieben, derart ausgebildet, dass die Längsmittelachse 70 der Führungsbohrung 71 von zumindest einem Kontaktrohr 20 wenigstens in einem Teilabschnitt 72 einer Kontaktrohrlänge 73 einen kurvenförmigen Verlauf aufweist.

Damit nunmehr die Führungsbohrung 71 des Kontaktrohres 20 im Bereich der Austrittsstelle 62 des Schweißdrahtes 21 bogenförmig bzw. abgewinkelt ausgebildet ist, wird zuerst das Kontaktrohr 20 geradlinig, wie in Fig. 9 dargestellt, hergestellt. Anschließend wird durch einen entsprechenden Arbeitsschritt die Biegung geschaffen, wobei hierzu beispielsweise das Kontaktrohr 20 in einer einfachen Form fixiert wird und mit einer entsprechenden Vorrichtung, nicht dargestellt, im vorderen Austrittsbereich 62 gegen die Außenfläche des Kontaktrohres 20 ein Druck ausgeübt wird, so dass sich das Kontaktrohr 20 in dem Teilbereich 72 um einen bestimmten Winkel 74 verformt. Damit eine entsprechend definierte Verformung durchgeführt werden kann, ist der Durchmesser im vorderen Teilbereich 72 kleiner als in einem dahinterliegenden Bereich 96.

Weiters bildet sich aufgrund der Biegung ein fließender Radius aus, wodurch sich der Schweißdraht 21 leicht einfädeln lässt. Hierbei wird bevorzugt die Führungsbohrung 71 für den Schweißdraht 21 größer ausgelegt als dies bei üblichen Kontaktrohren 20 der Fall ist. Beispielsweise weist die Führungsbohrung bei einem Schweißdraht 21 mit einem Durchmesser von 1,2 mm einen Durchmesser zwischen 1,4 mm bis 2 mm, bevorzugt 1,6 mm, auf. Damit wird auch erreicht, dass es zu weniger Zuwachsen des Kontaktrohres kommt und die Biegung durch Verformung hergestellt werden kann, da durch den größeren Durchmesser der Führungsbohrung 71 und der Verformung trotzdem der Schweißdraht 21 eingefädelt werden kann.

Weiters ist vorgesehen, dass eine Kontaktrohrstirnfläche 97 schräg abgeschnitten bzw. schräg ausgebildet ist. Hierbei ist die Kontaktrohrstirnfläche 97 gegenüber der Längsmittelachse 70 zwischen 40° und 70°, bevorzugt 45°, ausgebildet. Durch eine derartige Ausbildung wird erreicht, dass die Austrittsöffnung 62 oval ausgebildet ist, wodurch das Zuwachsen der Austrittsöffnung 62 durch Schweißspritzer wesentlich erschwert wird. Gleichzeitig wird auch erreicht, dass die Angriffsfläche für die Schweißspritzer eine geringere Angriffsfläche bildet und somit ein längerer Einsatz des Kontaktrohrs 20 ermöglicht wird. Selbstverständlich ist es möglich, dass die schräge Kontaktrohrstirnfläche 97 bei einem geraden oder gebogenen Kontaktrohr 20 eingesetzt werden kann.

Es ist möglich, dass die einzelnen zuvor beschriebenen Varianten untereinander kombiniert werden. Weiters kann die Erfindung für einen Eindraht-Schweißbrenner 6, der ausschließlich Komponenten wie z.B. ein Kontaktrohr, eine Kontaktbuchse, usw. zur Förderung eines einzelnen Schweißdrahtes 21 aufweist, angewandt werden, oder es kann die Erfindung für einen Mehrdraht-Schweißbrenner, der Komponenten zur Förderung von zumindest zwei Schweißdrähten 20 aufweist, angewandt werden. Es liegt dem Fachmann nahe, die vorliegende Erfindung für unterschiedliche Anzahlen von Schweißdrähten zur Anwendung zu bringen.

## Patentansprüche

1. Verfahren zur Prozesssteuerung einer Roboter-Schweißanlage mit einer Steuervorrichtung (83) und einem an einem Roboterarm (4) befestigten Schweißbrenner (6), insbesondere für einen Laser-Hybrid-Schweißprozess, mit einer in einem Austrittsbereich eines Schweißdrahtes (21) angeordneten Gasdüse (2), wobei während eines Wartungsablaufs des Schweißprozesses eine Positionierung des Schweißbrenners (6) in einer Wartungsposition erfolgt, worauf eine Verbindung zwischen der Gasdüse (2) und einem Inneneinsatz (28) des Schweißbrenners (6) gelöst wird, und die Gasdüse (2) vom Schweißbrenner (6) entfernt wird, worauf eine andere Gasdüse (2) am Schweißbrenner (6) positioniert wird und zwischen der Gasdüse (2) und einem Inneneinsatz (28) des Schweißbrenners (6) eine Verbindung hergestellt wird, wobei der Wartungsablauf zu festgelegten Zeitpunkten oder abhängig von sensorisch erfassten Prozessparametern gestartet wird, **dadurch gekennzeichnet, dass** die Verbindung zwischen der Gasdüse (2) und dem Inneneinsatz (28) des Schweißbrenners (6) durch räumliche Verkleinerung eines expandierfähigen Fixierungselements (30) des Schweißbrenners (6) gelöst wird, und nach der Positionierung der anderen Gasdüse (2) am Schweißbrenner (6) zwischen der Gasdüse (2) und dem Inneneinsatz (28) des Schweißbrenners (6) durch räumliche Ausdehnung des expandierfähigen Fixierungselements (30) eine insbesondere gasdichte Verbindung hergestellt wird, wobei der Zustand des expandierfähigen Fixierungselements (30) zum Lösen und Fixieren der Gasdüse (2) festgelegt wird, indem das mit einer, einen hydraulischen oder pneumatischen Druckerzeuger (41) aufweisenden Versorgungseinrichtung (40) gekoppelte Fixierungselement (30) über die mit dem Druckerzeuger (41) verbundene Steuervorrichtung (83) angesteuert wird.

2. Verfahren nach Anspruch 1, **dadurch gekennzeichnet, dass** von der Steuervorrichtung (83) ein Signal zum Bewegen des Schweißbrenners (6) in die Wartungsposition an einen Antrieb des Roboterarmes (4) übertragen wird.

3. Verfahren nach Anspruch 1 oder 2, **dadurch gekennzeichnet, dass** der Schweißbrenner (6) in der Wartungsposition in einer Reinigungsstation zum Ablegen der Gasdüse (2) und zur Aufnahme einer neuen Gasdüse (2) jeweils an definierten Koordinaten positioniert wird.

4. Verfahren nach Anspruch 1, **dadurch gekennzeichnet, dass** das Fixierungselement (30) zum Aktivieren von einer Versorgungseinrichtung (40) mit einem Medium beaufschlagt wird, wodurch das Fixierungselement (30) durch Anliegen eines Überdrucks ausgedehnt wird.

5. Verfahren nach Anspruch 1 oder 4, **dadurch gekennzeichnet, dass** durch Ausdehnung des Fixierungselements (30) eine kraftschlüssige, insbesondere reibschlüssige, Verbindung hergestellt wird.

6. Verfahren nach einem der Ansprüche 1 bis 5, **dadurch gekennzeichnet, dass** das Fixierungselement (30) durch einen verformbaren, insbesondere elastischen Schlauch (34) oder ein Dichtungselement gebildet wird.

7. Verfahren nach einem der Ansprüche 1 bis 6, **dadurch gekennzeichnet, dass** das Fixierungselement (30) mit einem Strömungskanal (47) für ein Fluid verbunden wird, der wiederum mit der hydraulischen oder pneumatischen Versorgungseinrichtung (40) verbunden wird.

8. Verfahren nach einem der Ansprüche 1 bis 7, **dadurch gekennzeichnet, dass** die Versorgungsvorrichtung (40) durch eine vorhandene Schutzgasversorgung des Schweißgerätes oder eine eigenständige Druckluftanlage gebildet wird.

9. Verfahren nach Anspruch 8, **dadurch gekennzeichnet, dass** die Druckluftanlage zur Versorgung des Fixierungselements (30) und gleichzeitig zur Bildung des Crossjets (7) im Laser-Schweißprozess vorgesehen wird.

10. Verfahren nach einem der Ansprüche 1 bis 9, **dadurch gekennzeichnet, dass** eine insbesondere zylindrische Innenfläche (29) der Gasdüse (2) kraftschlüssig, insbesondere reibschlüssig, und bevorzugt durchgängig bzw. lückenlos mit der Außenfläche (38) eines Inneneinsatzes (28) um den Umfang des Inneneinsatzes (28) verlaufend verbunden wird.

11. Verfahren nach einem der Ansprüche 1 bis 10, **dadurch gekennzeichnet, dass** die Gasdüse (2) über ein Positionierungselement am Gehäuse (35) definiert am Inneneinsatz (28) positioniert wird.

## Claims

1. A method for the process control of a robot welding system including a control device (83) and a welding torch (6) mounted on a robot arm (4), particularly for a laser-hybrid welding process, including a gas nozzle (2) arranged in an exit area of a welding wire (21), wherein, during a maintenance procedure of the welding process, positioning of the welding torch (6) in a maintenance position is effected, whereupon a connection between the gas nozzle (2) and an internal insert (28) of the welding torch (6) is disconnected and the gas nozzle (2) is removed from the welding torch (6), whereupon another gas nozzle (2) is positioned on the welding torch (6) and a connection is provided between the gas nozzle (2) and an internal insert (28) of the welding torch (6), wherein the maintenance procedure is started at fixed times or as a function of process parameters detected by sensors, **characterized in that** the connection between the gas nozzle (2) and the internal insert (28) of the welding torch (6) is disconnected by the spatial reduction in size of an expandable fixing element (30) of the welding torch (6) and, after having positioned the other gas nozzle (2) on the welding torch (6), a particularly gas-tight connection is provided between the gas nozzle (2) and the internal insert (28) of the welding torch (6) by the spatial expansion of the expandable fixing element (30), wherein the state of the expandable fixing element (30) for detaching and fixing the gas nozzle (2) is determined in that the fixing element (30), which is coupled to a supply device (40) equipped with a hydraulic or pneumatic pressure generator (41), is activated via the control device (83) connected with the pressure generator (41).

2. A method according to claim 1, **characterized in that** a signal for moving the welding torch (6) into the maintenance position is transmitted from the control device (83) to a drive of the robot arm (4).

3. A method according to claim 1 or 2, **characterized in that** the welding torch (6), in the maintenance position, is each positioned on defined coordinates in a cleaning station for removing the gas nozzle (2) and for receiving a new gas nozzle (2).

4. A method according to claim 1, **characterized in that** the fixing element (30) is supplied with a medium for activation by a supply device (40), wherein the fixing element (30) is expanded by an overpressure being applied.

5. A method according to claim 1 or 4, **characterized in that** a force-locking, in particular frictional, connection is provided by the expansion of the fixing element (30).

6. A method according to any one of claims 1 to 5, **characterized in that** the fixing element (30) is formed by a deformable, particularly elastic, hose (34) or a sealing element.

7. A method according to any one of claims 1 to 6, **characterized in that** the fixing element (30) is connected with a flow channel (47) for a fluid, which is in turn connected with the hydraulic or pneumatic supply device (40).

8. A method according to any one of claims 1 to 7, **characterized in that** the supply device (40) is formed by an existing protective-gas supply means of the welder or an independent compressed-air system.

9. A method according to claim 8, **characterized in that** the compressed-air system is provided for supplying the fixing element (30) and, at the same time, forming the cross jet (7) in the laser welding process.

10. A method according to any one of claims 1 to 9, **characterized in that** a particularly cylindrical interior surface (29) of the gas nozzle (2) is connected with the exterior surface (38) of an internal insert (28) in a force-locking, in particular frictional manner, and preferably in a continuous or uninterrupted manner, about the periphery of the internal insert (28).

11. A method according to any one of claims 1 to 10, **characterized in that** the gas nozzle (2) is positioned via a positioning element on the housing (35) in a defined manner on the internal insert (28).

## Revendications

1. Procédé de commande de processus d'une installation de soudage robotisée avec un dispositif de commande (83) et un chalumeau (6) fixé sur un bras de robot (4), en particulier pour un processus de soudage hybride au laser, avec une buse à gaz (2) aménagée dans une zone de sortie d'un fil de soudage (21), dans lequel, pendant une opération d'entretien du processus de soudage, on positionne le chalumeau (6) dans une position d'entretien, dans laquelle on supprime une liaison entre la buse à gaz (2) et une pièce rapportée interne (28) du chalumeau (6) et la buse à gaz (2) est dégagée du chalumeau (6), après quoi une autre buse à gaz (2) est mise en place sur le chalumeau (6) et une liaison est établie entre la buse à gaz (2) et une pièce rapportée interne (28) du chalumeau (6), l'opération d'entretien étant lancée à des moments déterminés ou en fonction de paramètres de processus enregistrés par capteur, **caractérisé en ce que** la liaison entre la buse à gaz (2) et la pièce rapportée interne (28) du chalumeau (6) est supprimée par une réduction spatiale d'un élément de fixation expansible (30) du chalumeau (6) et, après positionnement de l'autre buse à gaz (2) sur le chalumeau (6), on établit entre la buse à gaz (2) et la pièce rapportée interne (28) du chalumeau (6) une liaison en particulier étanche aux gaz en raison de l'expansion spatiale de l'élément de fixation expansible (30), l'état de l'élément de fixation expansible (30) permettant de dégager et de fixer la buse à gaz (2) étant déterminé par la commande de l'élément de fixation (30) couplé à un dispositif d'alimentation (40)et qui présente un générateur de pression (41) hydraulique ou pneumatique par le biais du dispositif de commande (83) raccordé au générateur de pression (41).

2. Procédé selon la revendication 1, **caractérisé en ce qu'**un signal pour déplacer le chalumeau (6) en position d'entretien est transmis du dispositif de commande (83) à un entraînement du bras de robot (4).

3. Procédé selon la revendication 1 ou 2, **caractérisé en ce que** le chalumeau (6) est positionné respectivement selon des coordonnées définies en position d'entretien dans un poste de nettoyage, afin de dégager la buse à gaz (2) et de recevoir une nouvelle buse à gaz (2).

4. Procédé selon la revendication 1, **caractérisé en ce que**, pour activer un dispositif d'alimentation (40), l'élément de fixation (30) est alimenté par un milieu permettant de déployer l'élément de fixation (30) par application d'une surpression.

5. Procédé selon la revendication 1 ou 4, **caractérisé en ce que** le déploiement de l'élément de fixation (30) permet d'établir une liaison par adhérence, en particulier par friction.

6. Procédé selon l'une quelconque des revendications 1 à 5, **caractérisé en ce que** l'élément de fixation (30) est formé par un tuyau (34) déformable, en particulier élastique, ou par un élément d'étanchéité.

7. Procédé selon l'une quelconque des revendications 1 à 6, **caractérisé en ce que** l'élément de fixation (30) est raccordé à un canal d'écoulement (47) pour un fluide, lequel canal est raccordé à son tour au dispositif d'alimentation hydraulique ou pneumatique (40).

8. Procédé selon l'une quelconque des revendications 1 à 7, **caractérisé en ce que** le dispositif d'alimentation (40) est formé par une alimentation existante en gaz de protection de l'appareil de soudage ou par une installation à air comprimé autonome.

9. Procédé selon la revendication 8, **caractérisé en ce que** l'installation à air comprimé est prévue pour alimenter l'élément de fixation (30) et, en même temps, pour former le jet croisé (7) dans le processus de soudage au laser.

10. Procédé selon l'une quelconque des revendications 1 à 9, **caractérisé en ce qu'**une surface interne (29) en particulier cylindrique de la buse à gaz (2) est raccordée par adhérence, en particulier par friction, et de préférence en continu ou sans vides à la surface externe (38) d'une pièce rapportée interne (28) sur la périphérie de la pièce rapportée interne (28).

11. Procédé selon l'une quelconque des revendications 1 à 10, **caractérisé en ce que** la buse à gaz (2) est positionnée via un élément de positionnement (28) sur le boîtier (35), de manière définie sur la pièce rapportée interne (28).
